# EUROPÄISCHE PATENTSCHRIFT

(11) **EP 1 396 734 B1**
(45) Veröffentlichungstag und Bekanntmachung des Hinweises auf die Patenterteilung: **15.06.2011**
(21) Anmeldenummer: 03017228.2
(22) Anmeldetag: 30.07.2003
(51) Int. Cl.: G01V 8/20, G01V 8/12

(54) **Optischer Sensor**
Optical sensor
Capteur optique

(30) Priorität: 03.09.2002 DE 10240475
(43) Veröffentlichungstag der Anmeldung: 10.03.2004
(73) Patentinhaber: Leuze electronic GmbH + Co. KG, 73277 Owen/Teck (DE)
(72) Erfinder: Lohmann, Lutz, Dr., 82140 Olching (DE); Haberl, Paul, 80999 München (DE)
(74) Vertreter: Ruckh, Rainer Gerhard

(56) Entgegenhaltungen:
- DE-A- 19 519 817
- DE-U- 20 104 248
- GB-A- 2 051 675
- US-A- 5 482 767
- US-A- 5 496 640
- US-A- 5 851 631
- US-A- 6 160 661

## Beschreibung

Die Erfindung betrifft einen optischen Sensor gemäß dem Oberbegriff des Anspruchs 1.

Derartige optische Sensoren können insbesondere als Lichtgitter ausgebildet sein. Ein solches Lichtgitter ist beispielsweise aus der DE 195 04 304 C1 bekannt. Das Lichtgitter weist zur Überwachung eines flächigen Überwachungsbereichs eine Sendereinheit und eine Empfängereinheit auf, die an gegenüberliegenden Rändern des Überwachungsbereichs angeordnet sind. Die Sendereinheit weist eine Anordnung von nebeneinander liegend angeordneten, Sendelichtstrahlen emittierenden Sendern auf. Entsprechend weist die Empfängereinheit eine Anordnung von nebeneinander liegend angeordneten Empfängern auf. Die Sendereinheit und die Empfängereinheit sind jeweils in einem Gehäuse integriert. In der Frontwand jedes Gehäuses ist ein Fenster angeordnet. Die von den Sendern emittierten Sendelichtstrahlen durchsetzen das Fenster im Gehäuse der Sendereinheit und gelangen so in den Überwachungsbereich. Bei freiem Strahlengang treffen die Sendelichtstrahlen als Empfangslichtstrahlen auf die Empfänger der Empfängereinheit, wobei diese das Fenster in der Empfängereinheit durchsetzen. Befindet sich ein Objekt im Strahlengang, so wird der Strahlengang der Sendelichtstrahlen wenigstens eines Senders unterbrochen, so dass diese nicht mehr auf den zugeordneten Empfänger oder die zugeordneten Empfänger auftreffen, wodurch als Objektmeldung ein Objektfeststellungssignal generiert wird.

Derartige Lichtgitter werden insbesondere im Bereich des Personenschutzes eingesetzt. Beispielsweise werden die Lichtgitter zur Überwachung von sicherheitskritischen Bereichen an Anlagen und Maschinen wie zum Beispiel Werkzeugmaschinen, Pressen oder dergleichen, eingesetzt.

Bei einem Eingriff in den vom Lichtgitter überwachten Überwachungsbereich wird durch die im Lichtgitter generierte Objektmeldung die Werkzeugmaschine außer Betrieb gesetzt, so dass für eine im Bereich der Werkzeugmaschine arbeitende Person die Gefahr von Verletzungen ausgeschlossen ist.

Derartige Lichtgitter können dabei insbesondere in explosionsgefährdeten Umgebungen eingesetzt werden.

Ebenso können in derartigen Umgebungen auch weitere optische Sensoren wie Lichtschranken, Lichttaster, Distanzsensoren oder Barcodelesegeräte eingesetzt werden.

Damit ein Einsatz dieser optischen Sensoren in derartigen explosionsgefährdeten Umgebungen möglich ist, wird an diese als zusätzliche Anforderung eine explosionssichere Kapselung deren optischer und elektronischer Komponenten gefordert, damit eine Entstehung von Funken im Bereich der explosionsgefährdeten Umgebung ausgeschlossen werden kann.

Demzufolge werden die Gehäuse derartiger optischer Sensoren derart ausgeführt, dass diese den jeweiligen Innenraum des Gehäuses gasdicht und staubdicht umschließen, wodurch eine hinreichend dichte Kapselung der optischen Sensoren erzielt wird.

Gefährdungen können jedoch insbesondere bei Schlageinwirkungen auf die optischen Sensoren entstehen. Hierbei sind insbesondere die Fenster derartiger optischer Sensoren gefährdet. Bei Schlageinwirkung können die Fenster splittern, wodurch Risse oder allgemein Öffnungen im Fenster entstehen, durch welche Gas oder Staub dringen kann.

Aus der US 5 851 631 A ist ein Fenster für einen Infrarot-Sensor bekannt, wobei Lichtstrahlen durch das Fenster auf einen Empfänger im Inneren des Sensors geführt sind. Das Fenster besteht aus einer Silikonscheibe und einer Plastikscheibe, die durch eine Klebeschicht verbunden sind.

Die DE 195 19 817 A1 betrifft ein Gehäuse für einen Sensor 1 mit einem einen Sendestrahl emittierenden Sendeelement und/oder einem einen Empfangslichtstrahl empfangenden Empfangselement, wobei in einer Öffnung in einer Gehäusewand ein Formteil fixiert ist, welches die Öffnung dicht abschließt und welches als Fenster ausgebildet sein kann. Das Formteil ist ein einer Aufnahme in der Gehäusewand so gelagert, dass die Aufnahme und der Rand des Formteils eine Ausnehmung bilden. In die Ausnehmung ist ein Kunststoffrahmen einsetzbar, welcher mittels Wärmestrahlung durch Anschmelzen an der Ausnehmung fixierbar ist.

In der US 5 482 767 A1 ist eine Sicherheitsglasscheibe beschrieben, die zwei Glasschichten aufweist, zwischen welchen eine Plastikschicht vorgesehen ist, in welche stoßabsorbierende oder stoßverteilende Partikel eingebracht sind. Diese absorbieren Spannungen in der Sicherheitsglasscheibe oder verteilen die Spannungen auf eine größere Fläche, so dass bei Stoßbelastungen kein Bruch der Sicherheitsglasscheibe erfolgt.

Die US 5 496 460 betrifft ein feuerfestes Fenster, bestehend aus zwei Glasscheiben mit einer dazwischen liegenden Polymerschicht, die nicht brennbar ist. Zudem kann zwischen den Glasscheiben ein kühlendes Gel eingebracht sein.

Der Erfindung liegt die Aufgabe zugrunde, einen optischen Sensor der eingangs genannten Art so auszubilden, dass dieser im Bereich des Explosionsschutzes einsetzbar ist.

Zur Lösung dieser Aufgabe sind die Merkmale des Anspruchs 1 vorgesehen. Vorteilhafte Ausführungsformen und zweckmäßige Weiterbildungen sind in den Unteransprüchen beschrieben.

Der erfindungsgemäße optische Sensor weist jeweils wenigstens einen Sendelichtstrahlen emittierenden Sender und einen Empfangslichtstrahlen empfangenden Empfänger auf, welche in wenigstens einem Gehäuse integriert sind. In dem Gehäuse ist wenigstens ein Fenster integriert, durch welches die Sendelichtstrahlen und/oder die Empfangslichtstrahlen geführt sind. Das Fenster besteht aus wenigstens zwei übereinander liegenden transparenten Scheiben, zwischen welchen ein transparentes elastisches Medium eingebracht ist.

Das erfindungsgemäße Fenster weist eine Verbundkonstruktion auf, mittels derer selbst bei Schlageinwirkung ein gasdichter und staubdichter Abschluss des Gehäuses gewährleistet wird.

Bei einer Schlageinwirkung auf das Fenster anstehen zwar Risse in wenigstens einer der Scheiben des Fensters, so dass dieses optisch zerstört wird, d.h. die Sendelichtstrahlen und/oder Empfangslichtstrahlen gelangen nicht mehr ungestört durch das Fenster. Jedoch wird durch das elastische Medium zwischen den beiden Scheiben erreicht, dass im Bereich der Risse keine undichten Stellen entstehen, durch welche Gase oder Staub entweichen könnten. Damit bleibt das gesamte Fenster auch bei Schlageinwirkungen gasdicht und staubdicht.

Durch die gasdichte und staubdichte Kapselung des Gehäuses auch bei auf das Fenster auftretenden Schlageinwirkungen sind die Voraussetzungen für den Einsatz des optischen Sensors im Bereich des Explosionsschutzes erfüllt.

Dabei ist insbesondere vorteilhaft, dass das erfindungsgemäße Fenster einfach und kostengünstig herstellbar ist. Hierbei ist das elastische Medium erfindungsgemäß von einer transparenten elastischen Folie, insbesondere einer Kunststoff-Folie gebildet. Derartige Folien sind kostengünstig herstellbar und können zudem einfach durch Klebeprozesse mit den beiden Scheiben des Fensters verbunden werden, wobei diese Scheiben entweder aus Glas oder aus transparentem Kunststoff bestehen können.

Durch die Transparenz des elastischen Mediums sowie der Klebemittel entsprechen die optischen Eigenschaften des erfindungsgemäßen Fensters einer einteiligen transparenten Scheibe entsprechender Dicke.

Die elastische Kunststoff-Folie ist hierbei in einer besonders zweckmäßigen Ausgestaltung beidseitig mit einer transparenten Klebeschicht beschichtet, wobei sich die Klebeschichten jeweils über die gesamte Fläche der Front- und Rückseite der Kunststoff-Folie erstrecken.

Die Flächen der Scheiben entsprechen dabei der Fläche der Kunststoff-Folie. Zur Montage des Fensters kann die Kunststoff-Folie auf die Scheiben einfach aufgesetzt werden, wobei durch die Klebeschichten über die gesamte Fensterfläche eine feste, gas- und staubdichte Verbindung der Komponenten erhalten wird.

Das erfindungsgemäße Fenster ist für unterschiedliche optische Sensoren einsetzbar. Insbesondere können die optischen Sensoren von Lichtgittern, Lichtschranken, Lichttastern, Distanzsensoren oder Barcodelesegeräten gebildet sein Je nach Ausbildung des optischen Sensors können dessen Komponenten in einem oder in mehreren Gehäusen integriert sein. Dabei weist jedes Gehäuse wenigstens ein Fenster auf, durch welches die Sendelichtstrahlen und/oder Empfangslichtstrahlen des optischen Sensors geführt sind.

Bei als Lichtschranken oder als Lichtgitter ausgebildeten optischen Sensoren werden der oder die Sender einerseits sowie der oder die Empfänger andererseits in separaten Gehäusen integriert. Demgegenüber sind bei als Lichttastern, Distanzsensoren und Barcodelesegeräten der oder die Sender sowie der oder die Empfänger typischerweise in einem Gehäuse integriert.

Die Erfindung wird im Nachstehenden anhand der Zeichnungen erläutert. Es zeigen:
- Fig1:: Schematische Darstellung eines Lichtgitters mit einer in einem ersten Gehäuse integrierten Sendereinheit und einer in einem zweiten Gehäuse integrierten Empfängereinheit.
- Fig. 2:: Querschnitt durch ein Gehäuse gemäß Figur 1.
- Fig. 3:: Detaildarstellung eines Fensters für ein Gehäuse gemäß den Figuren 1 und 2.

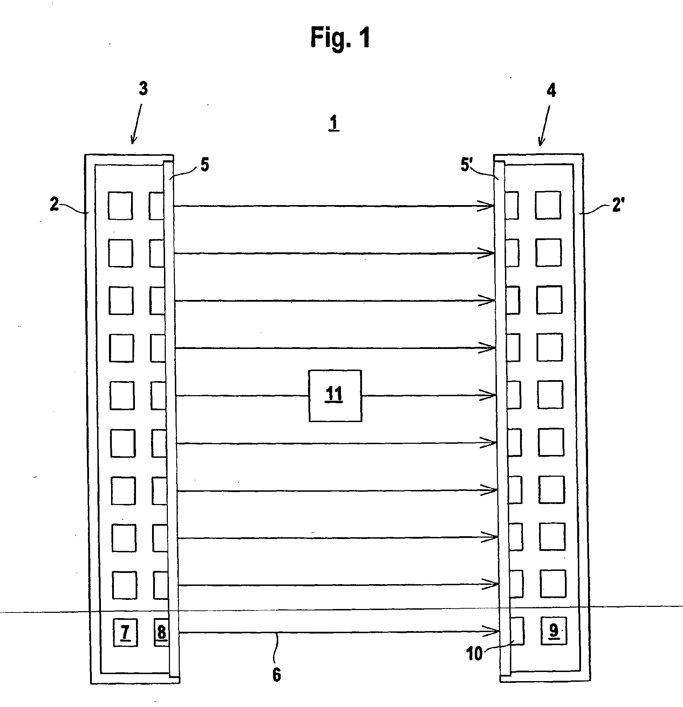

Figur 1 zeigt den Aufbau eines als Lichtgitter 1 ausgebildeten optischen Sensors. Das Lichtgitter 1 dient zur Überwachung eines in einer Ebene verlaufenden, flächigen Überwachungsbereichs. Das Lichtgitter 1 weist eine in einem ersten Gehäuse 2 integrierte Sendereinheit 3 und eine in einem zweiten Gehäuse 2' integrierte Empfängereinheit 4 auf. In der Frontwand jedes Gehäuses 2, 2' ist ein transparentes Fenster 5, 5' integriert.

Die Sendereinheit 3 weist eine Anordnung von Sendelichtstrahlen 6 emittierenden Sendern 7 auf. Die Sender 7 bestehen vorzugsweise aus identisch ausgebildeten Leuchtdioden und sind in Abstand nebeneinander liegend angeordnet, wobei die Sender 7 vorzugsweise äquidistant angeordnet sind. Die Sender 7 werden von einer nicht dargestellten Sender-Steuereinheit angesteuert. Im vorliegenden Ausführungsbeispiel werden die Sender 7 im Pulsbetrieb betrieben. Die Sender 7 emittieren somit Sendelichtimpulse mit einem vorgegebenen Puls-Pausen-Verhältnis. Die einzelnen Sender 7 emittieren zyklisch nacheinander Sendelichtimpulse, wobei die Taktung über die Sender-Steuereinheit erfolgt. Dabei werden innerhalb eines Abtastzyklus die Sender 7 entsprechend ihrer Reihenfolge in der Sendereinheit 3 in einer vorgegebenen Scanrichtung nacheinander aktiviert. Die Sendelichtimpulse des ersten Senders 7 dienen zur Synchronisation des Lichtgitters 1. Zweckmäßigerweise weisen hierzu die Sendelichtimpulse des ersten Senders 7 eine Kodierung auf, die sich eindeutig von den Kodierungen der Sendelichtimpulse der übrigen Sender 7 unterscheidet.

Zur Strahlformung der Sendelichtstrahlen 6 ist jedem Sender 7 eine Sendeoptik 8 vorgeordnet. Die Sendeoptiken 8 sind im Bereich der Frontwand des Gehäuses 2 hinter dem Fenster 5 angeordnet.

Die optischen Achsen der im Überwachungsbereich geführten Sendelichtstrahlen 6 verlaufen parallel zueinander in der Ebene des Überwachungsbereichs.

Die Empfängereinheit 4 weist eine Anordnung von identisch ausgebildeten, nebeneinander liegend angeordneten Empfängern 9 auf. Die Empfänger 9 bestehen vorzugsweise jeweils aus einer Fotodiode und sind äquidistant angeordnet. Jedem Empfänger 9 ist eine Empfangsoptik 10 vorgeordnet. Die Empfangsoptik 10 ist hinter dem Fenster 5' in der Frontwand des Gehäuses 2' angeordnet. Dabei liegt jeweils ein Empfänger 9 einem Sender 7 der Sendereinheit 3 gegenüber. Die Strahlformung der Sendelichtstrahlen 6 ist im vorliegenden Fall derart gewählt, dass bei freiem Strahlengang die Sendelichtstrahlen 6 eines Senders 7 als Empfangslichtstrahlen jeweils nur auf den gegenüberliegend angeordneten Empfänger 9 treffen. Jeder Sender 7 und der diesem zugeordnete Empfänger 9 bildet eine Strahlachse des Lichtgitters 1.

Die am Ausgang der Empfänger 9 anstehenden Empfangssignale werden in einer nicht dargestellten zentralen Empfänger-Steuereinheit ausgewertet. Bei freiem Strahlengang des Lichtgitters 1 treffen die Sendelichtstrahlen 6 ungehindert auf die zugeordneten Empfänger 9 und generieren dort einem freien Strahlengang entsprechende Referenz-Empfangssignale. Insbesondere erfolgt die Bewertung der Empfangssignale in der Auswerteeinheit mit einem Schwellwert, wobei die Amplituden der Referenz-Empfangssignale oberhalb des Schwellwerts liegen.

Dringt ein Objekt 11 in den Überwachungsbereich ein, so wird der Strahlengang der Sendelichtstrahlen 6 wenigstens eines Senders 7 unterbrochen. Das Empfangssignal des zugeordneten Empfängers 9 liegt dann unterhalb des Schwellwerts, das heißt an diesem Empfänger 9 werden keine Referenz-Empfangssignale registriert.

Die Unterbrechungen der Strahlachsen werden vorzugsweise innerhalb eines Abtastzyklus in der Empfänger-Steuereinheit zur Generierung eines Objektfeststellungssignals ausgewertet. Das Objektfeststellungssignal ist als binäres Schaltsignal ausgebildet, welches die Schaltzustände "0" und "1" aufweist. Der Schaltzustand "0" entspricht einem freien Strahlengang des Lichtgitters 1, d.h. in der Empfänger-Steuereinheit wurde kein Objekt 11 registriert. Der Schaltzustand "1" entspricht einem Objekteingriff in den Strahlengang des Lichtgitters 1. Durch die Generierung eines derartigen Objektfeststellungssignals wird ein Abschaltbefehl zum Abschalten einer Maschine oder Anlage generiert, deren Vorfeld mit dem Lichtgitter 1 überwacht wird.

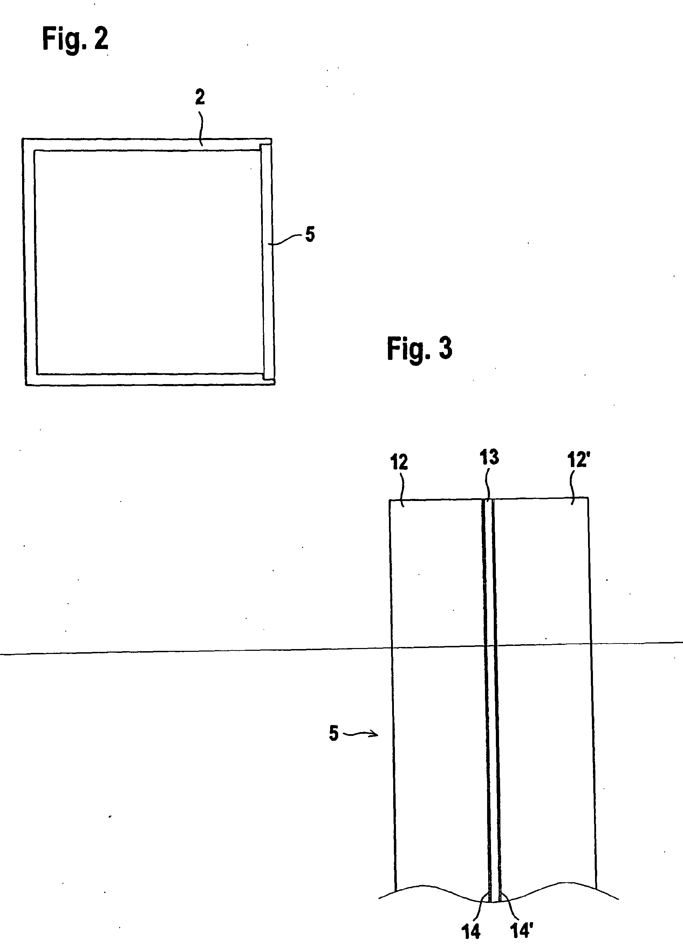

Die beiden Gehäuse 2, 2' des Lichtgitters 1 weisen im vorliegenden Fall einen identischen Aufbau auf. Jedes Gehäuse 2, 2' ist dabei als säulenförmiges Profil ausgebildet, welches bevorzugt aus Metall besteht. Die Profile des Lichtgitters 1 weisen im vorliegenden Ausführungsbeispiel, wie insbesondere aus Figur 2 ersichtlich, einen im Wesentlichen rechteckigen Querschnitt auf.

In der ebenen Frontwand jedes Gehäuses 2, 2' befindet sich eine Öffnung, in welche das jeweilige Fenster 5, 5' eingesetzt ist. Jedes Fenster 5, 5' erstreckt sich dabei über nahezu die gesamte Fläche der Frontwand des Gehäuses 2, 2'.

Die Fenster 5, 5' sind in dem jeweiligen Gehäuse 2, 2' mit Klebemitteln fixiert. Alternativ können zur Fixierung der Fenster 5, 5' Schnappverbindungen oder Rastmittel vorgesehen sein. Dabei werden die Nahtstellen zwischen dem jeweiligen Fenster 5, 5' und dem zugehörigen Gehäuse 2, 2' mit Dichtmitteln abgedichtet, so dass in jedem Fall die Fenster 5, 5' die Gehäuse 2, 2' gasdicht und staubdicht abschließen.

Eine derartige gasdichte und staubdichte Kapselung der Innenräume der Gehäuse 2, 2' ist eine notwendige Voraussetzung für den Einsatz der Lichtgitter 1 im Bereich des Explosionsschutzes.

Erfindungsgemäß sind die Fenster 5, 5' des Lichtgitters 1 zudem derart ausgebildet, dass diese selbst bei Schlageinwirkungen noch gas- und staubdicht bleiben. Damit ist eine weitere wesentliche Voraussetzung für den Einsatz des Lichtgitters 1 im Bereich des Explosionsschutzes erfüllt.

Die Fenster 5, 5' des Lichtgitters 1 weisen hierzu eine Verbundkonstruktion auf, die in Figur 3 schematisch dargestellt ist. Das Fenster 5 gemäß Figur 3 besteht dabei aus zwei Scheiben 12, 12', zwischen welchen ein transparentes, elastisches Medium eingebracht ist. Im vorliegenden Fall besteht das elastische Medium aus einer transparenten Kunststoff-Folie 13. Prinzipiell können auch Sandwich-Konstruktionen aus mehreren transparenten Folien eingesetzt werden. Weiterhin sind auch elastische Medien denkbar, welche in flüssiger oder fließfähiger Form auf eine Scheibe 12 aufgetragen werden und dort nach Aufbringen der zweiten Scheibe 12' aushärten.

Die transparenten Scheiben 12, 12' sind vorzugsweise identisch ausgebildet und bestehen aus Glas oder Kunststoff. Die Querschnittsfläche ist an die Scheibenflächen angepasst, so dass sich die Kunststoff-Folie 13 über die gesamten Querschnittsflächen der Scheiben 12, 12' erstreckt.

Zur Fixierung der einzelnen Komponenten des Fensters 5, 5' ist auf die Vorder- und Rückseite der Kunststoff-Folie 13 jeweils eine transparente Klebeschicht 14, 14' aufgebracht. Die Klebeschichten 14, 14' erstrecken sich dabei jeweils über die gesamte Querschnittsfläche der Kunststoff-Folie 13. Dadurch wird über die gesamte Fensterfläche eine stabile, gas- uns staubdichte Verbindung zwischen den Scheiben 12, 12' und der Kunststoff-Folie 13 erhalten. Die Montage des erfindungsgemäßen Fensters 5, 5' erfolgt einfach und schnell durch Aufziehen der Kunststoff-Folie 13 auf eine der Scheiben 12 wobei anschließend die zweite Scheibe 12' auf die noch freiliegende Seite der Kunststoff-Folie 13 aufgesetzt wird.

Bei einer Schlageinwirkung auf das Fenster 5, 5' wird trotz dabei entstehender Risse in den Scheiben 12, 12' die gasdichte und staubdichte Verschlusswirkung des Fensters 5, 5' aufrecht erhalten, da das Fenster 5, 5' im Bereich der Risse durch die Kunststoff-Folie 13 abgedichtet bleibt.

### Bezugszeichenliste

- (1): Lichtgitter
- (2,2'): Gehäuse
- (3): Sendereinheit
- (4): Empfängereinheit
- (5, 5'): Fenster
- (6): Sendelichtstrahlen
- (7): Sender
- (8): Sendeoptik
- (9): Empfänger
- (10): Empfangsoptik
- (11): Objekt
- (12, 12'): Scheibe
- (13): Kunststoff-Folie
- (14, 14'): Klebeschicht

## Patentansprüche

1. Optischer Sensor mit jeweils wenigstens einem Sendelichtstrahlen (6) emittierenden Sender (7) und einem Empfangslichtstrahlen empfangenden Empfänger (9), welche in wenigstens einem Gehäuse (2, 2') integriert sind, wobei in dem Gehäuse (2, 2') wenigstens ein Fenster (5, 5') integriert ist, durch welches die Sendelichtstrahlen (6) und/oder die Empfangslichtstrahlen geführt sind, **dadurch gekennzeichnet, dass** der optische Sensor für den Einsatz im Bereich des Explosionsschutzes ausgebildet ist, in dem das Fenster (5, 5') aus zwei wenigstens an den Scheibenflächen übereinander liegenden transparenten Scheiben (12, 12') besteht, zwischen welchen ein transparentes elastisches Medium in Form einer elastischen Kunststoff-Folie (13) eingebracht ist, wobei bei durch Schlagwirkung entstehenden Rissen in wenigstens einer der Scheiben durch das elastische Medium ein gasdichter und staubdichter Abschluss des Gehäuses (2, 2') gewährleistet ist.

2. Optischer Sensor nach Anspruch 1, **dadurch gekennzeichnet, dass** die Scheiben (12, 12') flächengleich ausgebildet sind.

3. Optischer Sensor nach Anspruch 2, **dadurch gekennzeichnet, dass** sich die elastische Kunststoff-Folie (13) über die gesamten Flächen der Scheiben (12, 12') erstreckt.

4. Optischer Sensor nach einem der Ansprüche 1 - 3, **dadurch gekennzeichnet, dass** die Kunststoff-Folie (13) mit den Scheiben (12, 12') verklebt ist.

5. Optischer Sensor nach Anspruch 4, **dadurch gekennzeichnet, dass** beide Seiten der Kunststoff Folie (13) vollständig mit einer transparenten Klebeschicht (14, 14') überzogen sind.

6. Optischer Sensor nach einem der Ansprüche 1 - 5, **dadurch gekennzeichnet, dass** die Scheiben (12, 12') aus Kunststoff oder Glas bestehen.

7. Optischer Sensor nach einem der Ansprüche 1 - 6, **dadurch gekennzeichnet, dass** das Fenster (5, 5') in einer Öffnung in der Frontwand des Gehäuses (2, 2') befestigt ist.

8. Optischer Sensor nach Anspruch 7, **dadurch gekennzeichnet, dass** das Fenster (5, 5') mittels Schnappverbindungen oder Rastmitteln in der Frontwand des Gehäuses (2, 2') fixiert ist.

9. Optischer Sensor nach Anspruch 7, **dadurch gekennzeichnet, dass** das Fenster (5, 5') in der Frontwand des Gehäuses (2, 2') mittels Klebemitteln fixiert ist.

10. Optischer Sensor nach einem der Ansprüche 1 - 9, **dadurch gekennzeichnet, dass** dieser als Lichtgitter (1) ausgebildet ist.

11. Optischer Sensor nach Anspruch 10, **dadurch gekennzeichnet, dass** das Lichtgitter (1) zwei Gehäuse (2, 2') aufweist, wobei in einem ersten Gehäuse (2) eine Anordnung von Sendelichtstrahlen (6) emittierenden Sendern (7) und im zweiten Gehäuse (2') eine Anordnung von Empfangslichtstrahlen emittierenden Empfängern (9) integriert sind.

12. Optischer Sensor nach Anspruch 11, **dadurch gekennzeichnet, dass** jedes Gehäuse (2, 2') von einem säulenförmigen Profil gebildet ist, wobei sich die Öffnung zur Aufnahme des Fensters (5, 5') über die gesamte Fensterwand des Gehäuses (2, 2') erstreckt.

13. Optischer Sensor nach Anspruch 12, **dadurch gekennzeichnet, dass** das ein Gehäuse (2, 2') bildende Profil einen rechteckigen Querschnitt aufweist.

14. Optischer Sensor nach einem der Ansprüche 1 - 9, **dadurch gekennzeichnet, dass** dieser als Lichtschranke ausgebildet ist, deren Sender (7) in einem ersten Gehäuse (2) und deren Empfänger (9) in einem zweiten Gehäuse (2') integriert ist.

15. Optischer Sensor nach einem der Ansprüche 1 - 9, **dadurch gekennzeichnet, dass** dieser als Lichtschranke oder als Distanzsensor mit jeweils wenigstens einem Sender (7) und einem Empfänger (9) ausgebildet ist, welche in einem gemeinsamen Gehäuse (2, 2') integriert sind.

16. Optischer Sensor nach einem der Ansprüche 1 - 9, **dadurch gekennzeichnet, dass** dieser als Barcodelesegerät mit einem Sender (7) und einem Empfänger (9) ausgebildet ist, welche in einem gemeinsamen Gehäuse (2, 2') integriert sind.

## Claims

1. Optical sensor with in each instance at least one transmitter (7) emitting transmitted light beams (6) and receiver (9) receiving received light beams, the transmitter and receiver being integrated in at least one housing (2, 2'), wherein integrated in the housing (2, 2') is at least one window (5, 5') through which the transmitted light beams (6) and/or the received light beams are guided, **characterised in that** the optical sensor is constructed for use in the field of protection against explosion, in which the window (5, 5') consists of at least two transparent panes (12, 12'), which lie one above the other at least at the pane surfaces and between which a transparent elastic medium in the form of an elastic plastics material film (13) is arranged, wherein in the case of cracks, which arise due to impact, in at least one of the panes a gas-tight and dust-tight closure of the housing (2, 2') is ensured by the elastic medium.

2. Optical sensor according to claim 1, **characterised in that** the panes (12, 12') are formed to be of equal area.

3. Optical sensor according to claim 2, **characterised in that** the elastic plastics material film (13) extends over the entire areas of the panes (12, 12').

4. Optical sensor according to any one of claims 1 to 3, **characterised in that** the plastics material film (13) is glued to the panes (12, 12').

5. Optical sensor according to claim 4, **characterised in that** the two sides of the plastics material film (13) are completely covered by a transparent adhesive layer (14, 14').

6. Optical sensor according to any one of claims 1 to 5, **characterised in that** the panes (12, 12') consist of synthetic material or glass.

7. Optical sensor according to any one of claims 1 to 6, **characterised in that** the window (5, 5') is fastened in an opening in the front wall of the housing (2, 2').

8. Optical sensor according to claim 7, **characterised in that** the window (5, 5') is fixed in the front wall of the housing (2, 2') by means of snap connections or detent means.

9. Optical sensor according to claim 7, **characterised in that** the window (5, 5') is fixed in the front wall of the housing (2, 2') by means of an adhesive.

10. Optical sensor according to any one of claims 1 to 9, **characterised in that** this is constructed as a light grating (1).

11. Optical sensor according to claim 10, **characterised in that** the light grating (1) comprises two housings (2, 2'), wherein an arrangement of transmitters (7) emitting transmitted light beams (6) is integrated in a first housing (2) and an arrangement of receivers (9) emitting received light beams is integrated in a second housing (2').

12. Optical sensor according to claim 11, **characterised in that** each housing (2, 2') is formed by a column-shaped profile section, wherein the opening for reception of the window (5, 5') extends over the entire window wall of the housing (2, 2').

13. Optical sensor according to claim 12, **characterised in that** the profile section forming the housing (2, 2') has a rectangular cross-section.

14. Optical sensor according to any one of claims 1 to 9, **characterised in that** this is constructed as a light barrier, the transmitter (7) of which is integrated in a first housing (2) and the receiver (9) of which is integrated in a second housing (2').

15. Optical sensor according to any one of claims 1 to 9, **characterised in that** this is constructed as a light barrier or as a distance sensor with in each instance at least one transmitter (7) and receiver (9), the transmitter and receiver being integrated in a common housing (2, 2').

16. Optical sensor according to any one of claims 1 to 9, **characterised in that** this is constructed as a barcode reader with a transmitter (7) and a receiver (9), the transmitter and receiver being integrated in a common housing (2, 2').

## Revendications

1. Capteur optique comportant au moins un émetteur (7) émettant des rayons lumineux d'émission (6) et un récepteur (9) recevant des rayons lumineux de réception, lesquels sont intégrés dans un boîtier (2, 2'), dans lequel boîtier (2, 2') est intégrée au moins une fenêtre (5, 5') à travers laquelle les rayons lumineux d'émission (6) et/ou les rayons lumineux de réception sont guidés, **caractérisé en ce que** le capteur optique est conçu pour être utilisé dans le domaine de la protection contre les explosions, la fenêtre (5, 5') étant formée de deux vitres transparentes (12, 12') superposées au moins au niveau des surfaces des vitres, entre lesquelles est introduit un milieu élastique transparent sous la forme d'une feuille en matière plastique élastique (13), le milieu élastique assurant une fermeture étanche aux gaz et aux poussières du boîtier (2, 2') en cas de fissures résultant d'un effet d'impact dans au moins une des vitres.

2. Capteur optique selon la revendication 1, **caractérisé en ce que** les vitres (12, 12') sont réalisées avec des surfaces égales.

3. Capteur optique selon la revendication 2, **caractérisé en ce que** la feuille en matière plastique élastique (13) s'étend sur toute les surfaces des vitres (12, 12').

4. Capteur optique selon une des revendications 1 à 3, **caractérisé en ce que** la feuille en matière plastique (13) est collée avec les vitres (12, 12').

5. Capteur optique selon la revendication 4, **caractérisé en ce que** les deux côtés de la feuille en matière plastique (13) sont entièrement recouverts d'une couche de colle transparente (14, 14').

6. Capteur optique selon une des revendications 1 à 5, **caractérisé en ce que** les vitres (12, 12') sont en matière plastique ou en verre.

7. Capteur optique selon une des revendications 1 à 6, **caractérisé en ce que** la fenêtre (5, 5') est fixée dans une ouverture dans la face avant du boîtier (2, 2').

8. Capteur optique selon la revendication 7, **caractérisé en ce que** la fenêtre (5, 5') est fixée dans la face avant du boîtier (2, 2') au moyen de raccords encliquetables ou de moyens d'enclenchement.

9. Capteur optique selon la revendication 7, **caractérisé en ce que** la fenêtre (5, 5') est fixée dans la face avant du boîtier (2, 2') au moyen de produits adhésifs.

10. Capteur optique selon une des revendications 1 à 9, **caractérisé en ce que** celui-ci est réalisé sous la forme d'un rideau photoélectrique (1).

11. Capteur optique selon la revendication 10, **caractérisé en ce que** le rideau photoélectrique (1) présente deux boîtiers (2, 2'), un arrangement d'émetteurs (7) émettant des rayons lumineux d'émission (6) étant intégré dans un premier boîtier (2) et un arrangement de récepteurs (9) recevant des rayons lumineux de réception dans le deuxième boîtier (2').

12. Capteur optique selon la revendication 11, **caractérisé en ce que** chaque boîtier (2, 2') est formé par un profilé en forme de colonne, l'ouverture de réception de la fenêtre (5, 5') s'étendant sur toute la paroi de fenêtre du boîtier (2, 2').

13. Capteur optique selon la revendication 12, **caractérisé en ce que** le profil formant un boîtier (2, 2') présente une section rectangulaire.

14. Capteur optique selon une des revendications 1 à 9, **caractérisé en ce que** celui-ci est réalisé sous la forme d'une barrière photoélectrique dont l'émetteur (7) est intégré dans un premier boîtier (2) et le récepteur (9) dans un deuxième boîtier (2').

15. Capteur optique selon une des revendications 1 à 9, **caractérisé en ce que** celui-ci est réalisé sous la forme d'une barrière photoélectrique ou d'un capteur de distance comportant dans chaque cas au moins un émetteur (7) et un récepteur (9) qui sont intégrés dans un boîtier commun (2, 2').

16. Capteur optique selon une des revendications 1 à 9, **caractérisé en ce que** celui-ci est réalisé sous la forme d'un lecteur de codes-barres comportant un émetteur (7) et un récepteur (9) qui sont intégrés dans un boîtier commun (2, 2').
